# EUROPÄISCHE PATENTANMELDUNG

(11) **EP 4 293 379 A1**
(43) Veröffentlichungstag der Anmeldung: **20.12.2023**
(21) Anmeldenummer: 23177437.3
(22) Anmeldetag: 06.06.2023
(51) Int. Cl.: G01S 7/00, G01S 13/00, G01S 13/74

(54) **NETZWERKKNOTEN FÜR EIN SENSORSYSTEM, SENSORSYSTEM, VERFAHREN UND COMPUTERPROGRAMM**

(30) Priorität: 13.06.2022 DE 102022114824
(71) Anmelder: Fraunhofer-Gesellschaft zur Förderung der angewandten Forschung e.V., 80686 München (DE)
(72) Erfinder: UMMENHOFER, Martin, 53343 Wachtberg (DE); PETERVARI, René, 53343 Wachtberg (DE); BIALLAWONS, Oliver, 53343 Wachtberg (DE); JOHANNES, Winfried, 53343 Wachtberg (DE); HOMMES, Alexander, 53343 Wachtberg (DE)
(74) Vertreter: 2SPL Patentanwälte PartG mbB

(57) **Zusammenfassung**

Ausführungsbeispiele der vorliegenden Erfindung schaffen einen Netzwerkknoten 30 für ein Sensorsystem. Der Netzwerkknoten 30 umfasst eine oder mehrere Schnittstellen 32 zur Kommunikation mit einem weiteren Netzwerkknoten und ein Kontrollmodul 34, dazu ausgebildet die eine oder mehreren Schnittstellen 32 zu kontrollieren. Ferner ist das Kontrollmodul 34 dazu ausgebildet eine an einem Objekt reflektierte oder von diesem Objekt ausgesandte erste physikalische Welle zu detektieren. Außerdem ist das Kontrollmodul 34 dazu ausgebildet eine externe Information über eine an dem Objekt reflektierte oder eine von diesem Objekt ausgesandte zweite physikalische Welle von dem weiteren Netzwerkknoten zu empfangen und eine Information für das Sensorsystems basierend auf der ersten detektierten physikalischen Welle und der externen Information zu bestimmen.

## Beschreibung

Ausführungsbeispiele der vorliegenden Erfindung beziehen sich auf einen Netzwerkknoten für ein Sensorsystem, ein Sensorsystem, ein Verfahren und ein Computerprogramm. Insbesondere aber nicht ausschließlich, beziehen sich Ausführungsbeispiele der vorliegenden Erfindung auf eine Verbesserung eines Sensorsystems durch einen Empfang einer externen Information von einem weiteren Netzwerkknoten.

Durch den verstärkten Einsatz von automatisierten Luftfahrzeugen (beispielsweise Flug/Transportdrohnen, urbane Luftmobilität, etc.) und deren steigender Miniaturisierung wandelt sich die Luftfahrtbranche zunehmend und stellt damit auch neue Anforderungen an die Flugsicherung. Ein sicherer Betrieb von Drohnen erfordert nicht zuletzt neuartige Leitsysteme, welche insbesondere im urbanen Umfeld hohen Sicherheitsstandards in einer komplexen Umgebung genüge tragen. Zur Unterstützung dieser auch als UTM-Systeme (Unmanned Aircraft System Traffic Management) bekannten System, sind gleichermaßen flexibel einsetzbare sowie robuste und Strahlungsarme Sensornetzwerke erforderlich.

DE 10 2019 007 833 A1 offenbart ein Radarsystem, bei dem es sich um ein Drohnenradar handelt, d.h. einen kollaborierenden Schwarm aus einzelnen Drohnen, welche jeweils eine Radarantenneneinheit zum Aussenden und Empfangen von Radarstrahlung tragen und von einer zentralen bodengebundenen Systemsteuereinrichtung kommandiert werden.

RANA T. [et al.] "An Intelligent approach for UAV and Drone Privacy Security Using Blockchain Methodology" offenbart eine Methode, um eine Sicherheit von UAVs und Drohnen durch den Einsatz der Blockchain Technologie zu verbessern. Blockchain ist eine hochsichere Technologie, da sie mit Kryptographie mit privatem Schlüssel und ein Peer-to-Peer-Netzwerk. Durch diese Technologie bei der Übertragung von Signalen vom von der Steuerung zur Drohne oder zum UAV kann ein zusätzliches Maß an Sicherheit bei der Übertragung von Signalen erreicht und eine Konnektivität erhöht werden.

KIDD T. [et al.] "UAV Power Management, Generation, and Storage System Principles and Design" erörtert die jüngsten Fortschritte eines mehrjährigen Projekt, das das Konzept eines unbemannten Luftfahrzeugs (UAV), das teilweise von der natürlichen Umwelt angetrieben wird, auf die das UAV während seiner Flugbahn trifft. Dieser UAV-Flug wird mit Hilfe von Systemen zur Energieerzeugung, Management- und Speichersystemen erreicht. Das Fluggerätverbesserung der Nachhaltigkeit oder Ausdauer ist der Hauptvorteil dieser Konstruktion, da sie Energie aus der Umwelt zieht und die Möglichkeit bietet, einen Teil der UAV-Struktur zu ersetzen, um parasitäres Gewicht zu reduzieren.

WO 2018/ 122 830 A1 offenbart eine Konfiguration einer Luftschiffdrohne mit mindestens einen gefüllten Hohlraum. Der Hohlraum ist mit einem Gas leichter als Luft gefüllt. Der Hohlraum besteht aus einer gebogenen oder extrudierten geschlossenen 2D-Geometrie und ist von der Drohne abnehmbar und kann transparent oder farblich getarnt sein. Um die Kontrolle und die Höhe des Luftfahrzeugs zu erhalten, können Auftriebsflächen eingebaut werden. Solche Auftriebsflächen können aktive und/oder passive Steuerflächen umfassen, um die Flugstabilität zu erhalten. Zusätzlich können Hohlräume, Spalten, Öffnungen und Ventile auf der Oberfläche des Fluggeräts angebracht werden, um weitere Effizienzvorteile zu erzielen.

Bekannte Probleme anderer Sensorsysteme sind beispielsweise eine Anfälligkeit gegenüber Störung einer zentralen Datenverarbeitungseinheit, ein/e Ausfall/Störung eines multi-input multi-output (MIMO)-Radars, ein Bedarf einer vorhandenen Strom-/Netzwerkinfrastruktur, eine Vollständig eines aktiven Systems ohne Option für reduzierte passive Verarbeitung oder eine Anfälligkeit gegenüber eines "Man-in-the-middle" Angriffs. Es besteht daher ein Bedarf daran, einen Netzwerkknoten eines Sensorsystems zu verbessern, sodass das Sensorsystem, welches den Netzwerkknoten umfasst, verbessert werden kann.

Ausführungsbeispiele basieren auf dem Kerngedanken, dass ein Netzwerkknoten für ein Sensorsystem verbessert werden kann, indem der Netzwerkknoten ausgebildet wird, eine externe Information über eine an einem Objekt reflektierte oder eine von diesem Objekt ausgesandte zweite physikalische Welle von einem weiteren Netzwerkknoten zu empfangen. Dadurch kann der Netzwerkknoten beispielsweise über eine Position des Objekts, eine gemessene Signalintensität, etc. welche durch den weiteren Netzwerkknoten bestimmt/detektiert wurde, informiert werden. Basierend auf dieser externen Information und einer Detektion einer reflektierte oder von diesem Objekt ausgesandte ersten physikalischen Welle kann der Netzwerkknoten dann eine Information für das Sensorsystem bestimmen.

Ausführungsbeispiele betreffen einen Netzwerkknoten für ein Sensorsystem, umfassend eine oder mehrere Schnittstellen zur Kommunikation mit einem weiteren Netzwerkknoten und ein Kontrollmodul, dazu ausgebildet die eine oder mehreren Schnittstellen zu kontrollieren. Ferner ist das Kontrollmodul dazu ausgebildet eine an einem Objekt reflektierte oder von diesem Objekt ausgesandte erste physikalische Welle zu detektieren. Außerdem ist das Kontrollmodul dazu ausgebildet eine externe Information über eine an dem Objekt reflektierte oder eine von diesem Objekt ausgesandte zweite physikalische Welle von dem weiteren Netzwerkknoten zu empfangen und eine Information für das Sensorsystems basierend auf der ersten physikalischen Welle und der externen Information zu bestimmen. Dadurch kann dem Netzwerkknoten ermöglicht werden, eine notwendige Berechnung für eine Bestimmung eines Parameters des Objekts, beispielsweise eine Position zu durchzuführen. Optional oder alternativ kann dem Netzwerkknoten ermöglicht werden, eine Überprüfung einer Konsistenz der externen Information mit der detektierten physikalischen Welle durchzuführen. Insbesondere kann dadurch eine zentrale Datenverarbeitungseinheit zur Verarbeitung der Daten einer Vielzahl an Netzwerkknoten eingespart werden. Ferner kann eine Berechnung der Information für das Sensorsystem durch eine Vielzahl an Netzwerkknoten ermöglicht werden, wodurch eine dezentrale Berechnung ermöglicht wird. Hierdurch kann das Sensorsystem beispielsweise dynamisch an eine aktuelle Situation angepasst werden, eine Kontrolle einzelner Netzwerkknoten erfolgen, etc.

Ausführungsbeispiele betreffen ein Verfahren für einen Netzwerkknoten eines Sensorsystems umfassend Detektieren einer an einem Objekt reflektierten oder eine von diesem Objekt ausgesandten ersten physikalischen Welle und Empfangen einer externen Information über eine an dem Objekt reflektierten oder von diesem Objekt ausgesandten zweiten physikalischen Welle von einem weiteren Netzwerkknoten. Ferner umfasst das Verfahren Bestimmen einer Information für das Sensorsystem basierend auf der ersten detektierten physikalischen Welle und der externen Information.

Ausführungsbeispiele schaffen auch ein Computerprogramm zur Durchführung eines der hierin beschriebenen Verfahren, wenn das Computerprogramm auf einem Computer, einem Prozessor, oder einer programmierbaren Hardwarekomponente abläuft.

Ausführungsbeispiele werden nachfolgend bezugnehmend auf die beiliegenden Figuren näher erläutert:
Fig. 1 zeigt ein Blockdiagramm eines Netzwerkknotens für ein Sensorsystem;
Fig. 2 zeigt eine schematische Darstellung eines Beispiels eines Sensorsystems; und
Fig. 3 zeigt eine schematische Darstellung eines Beispiels eines Verfahrens.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

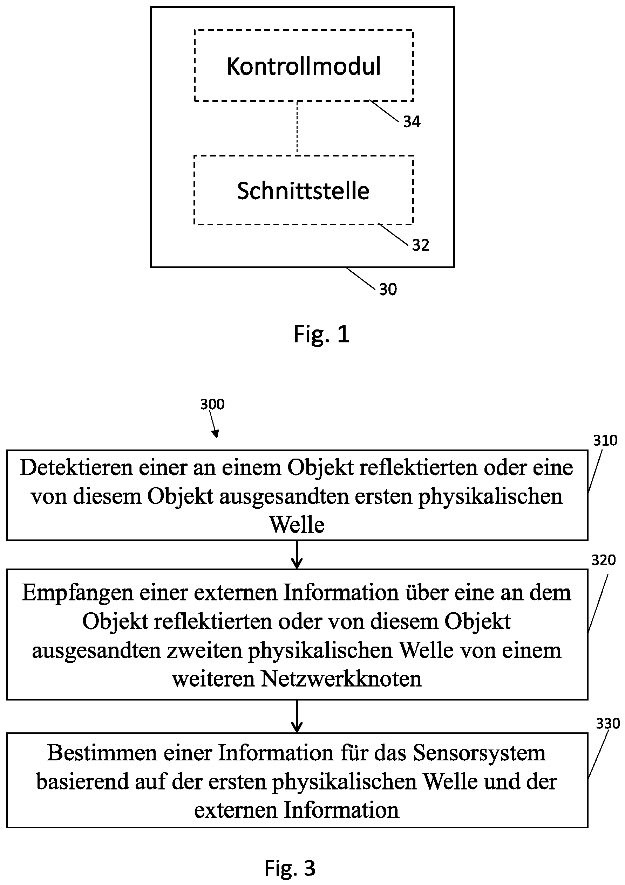

Fig. 1 zeigt ein Blockdiagramm eines Netzwerkknotens 30 für ein Sensorsystem. Der Netzwerkknoten 30 umfasst eine oder mehrere Schnittstellen 32 zur Kommunikation mit einem weiteren Netzwerkknoten und ein Kontrollmodul 34, dazu ausgebildet die eine oder mehreren Schnittstellen 32 zu kontrollieren. Ferner ist das Kontrollmodul 34 dazu ausgebildet eine an einem Objekt reflektierte oder von diesem Objekt ausgesandte erste physikalische Welle zu detektieren. Außerdem ist das Kontrollmodul 34 dazu ausgebildet eine externe Information über eine an dem Objekt reflektierte oder eine von diesem Objekt ausgesandte zweite physikalische Welle von dem weiteren Netzwerkknoten zu empfangen und eine Information für das Sensorsystems basierend auf der ersten detektierten physikalischen Welle und der externen Information zu bestimmen. Dadurch kann eine Berechnung einer Information für das Sensorsystem dezentralisiert erfolgen. Beispielsweise kann eine zentrale Datenverarbeitungseinheit eingespart werden. Insbesondere kann mit dem Netzwerkknoten 30 ein resilientes Netzwerk aus kommunizierenden Netzwerkknoten 30, beispielsweise Radarknoten, aufgebaut werden. Dadurch kann ein Sensorsystem zur Verfügung gestellt werden, welches eine erhöhte Zuverlässigkeit bieten kann, beispielsweise eine Identifizierung eines fehlerhaften Netzwerkknoten ermöglicht.

Eine dezentrale Berechnung (auch unter dem Prinzip Edge-Computing referenziert) kann eine Realisierung einer dezentrale Netzwerkarchitektur für das Sensorsystem erlauben. Die dezentrale Netzwerkarchitektur kann insbesondere durch einzelne Netzwerkknoten 30 erfolgen, welche untereinander kommunizieren. Dadurch kann insbesondere eine zentrale Datenverarbeitungseinheit als "Single-Point-Of Failure" vermieden werden. Ferner kann eine Skalierbarkeit der Netzwerkarchitektur des Sensorsystems erhöht werden. Außerdem kann eine Selbstorganisation der Netzwerkarchitektur des Sensorsystems erfolgen, wodurch eine Resilienz gegenüber einem Ausfall einzelner Netzwerkknoten, z. B. eines MIMO-Radars, ermöglicht wird. Ferner kann eine auf die Stabilität und Sicherheit des Netzwerks gerichtete Reaktion des Systems auf Fehler, unerwartete Ereignisse und/oder Teilausfälle seiner Netzwerkknoten erfolgen.

Eine dezentrale Verarbeitung der Netzwerkarchitektur des Sensorsystems kann durch das Kontrollmodul 34 ermöglicht werden, welches dazu ausgebildet ist die externe Information von dem weiteren Netzwerkknoten zu empfangen. Dadurch kann eine Verbindung zwischen einzelnen Netzwerkknoten 30 hergestellt werden. Ferner kann der Netzwerkknoten eine Selbstorganisation durchführen, beispielsweise eine Abstrahlungscharakteristik der ersten physikalischen Welle bestimmen, wie z. B. eine Intensität, eine Wellenlänge, eine Zeit der Abstrahlung etc.

Beispielsweise können die einzelnen Netzwerkknoten 30 über drahtlose Kommunikationskanäle kommunizieren. Die externe Information kann beispielsweise in ein Radarsignal integriert sein, (vergleichbar mit dem Prinzip der Joint Communication, welches aus Radarsystemen insbesondere für Telekommunikationstechnologie wie 6G bekannt ist). Beispielsweise kann eine Übertragung mit Radar und Kommunikation in Koexistenz in einem Signal stattfinden. Insbesondere können die einzelne Netzwerkknoten 30 mittels einer Radiofrequenzemission kommunizieren, welche sowohl Merkmale von Radarsignalen als auch von Kommunikationssignalen aufweist. Insbesondere kann der Netzwerkknoten 30 bzw. das Sensorsystem in eine Telekommunikationsinfrastruktur eingebunden werden, beispielsweise eine 3G, 4G, 5G, 6G Telekommunikationsinfrastruktur. Beispielsweise kann ein Netzwerkknoten 30 von einem Fahrzeug umfasst sein, welches in einem Kommunikationsnetzwerk mit anderen Fahrzeugen (weiteren Netzwerkknoten) kommuniziert. Beispielsweise kann eine Kommunikation über cooperative awareness messages erfolgen. Optional oder alternativ können die einzelnen Netzwerkknoten 30 auch über eine kabelgestützte Verbindung kommunizieren. Beispielsweise kann ein Netzwerkknoten 30 auf Basis neuer Mobilfunkstandards (z. B 6G) welche nativ Übertragungsprotokolle zu Joint Sense and Communication verwenden, die externe Information von dem weiteren Netzwerkknoten empfangen.

Eine physikalische Welle kann jede beliebige Welle sein, die dazu geeignet ist, an einem Objekt gestreut und/oder von diesem ausgesandt zu werden. Beispielsweise kann eine physikalische Welle eine elektromagnetische Welle, beispielsweise eine Welle für Radar im Radiofrequenzbereich, eine akustische Welle, beispielsweise eine Welle für Sonar im Ultraschallbereich, etc. sein.

Beispielsweise kann das Objekt flugfähig sein, beispielsweise eine Drohne, ein Flugzeug, ein Hubschrauber, etc. Beispielsweise kann das Objekt schwimmfähig sein, beispielsweise ein Boot, eine Boje, etc. Das Objekt kann über eine Abstrahlungseinheit verfügen, sodass die erste physikalische Welle aktiv von dem Objekt abgestrahlt werden kann. In diesem Fall kann eine Detektion durch das Kontrollmodul 34 passiv erfolgen, also ohne ein Aussenden der ersten physikalischen Welle durch den Netzwerkknoten 30. Optional oder alternativ kann die erste und/oder zweite physikalische Welle auch durch eine andere Komponente abgestrahlt werden, beispielsweise den Netzwerkknoten 30 oder respektive den weiteren Netzwerkknoten, sodass die erste physikalische Welle an dem Objekt reflektiert wird. In diesem Fall kann eine Detektion durch das Kontrollmodul 34 aktiv (wenn die erste physikalische Welle von dem Netzwerkknoten 30 abgestrahlt wurde) bzw. passiv (wenn die erste physikalische Welle nicht von dem Netzwerkknoten 30, sondern beispielsweise von dem weiteren Netzwerkknoten abgestrahlt wurde) erfolgen.

Die erste physikalische Welle kann mittels der einen oder mehreren Schnittstellen 32 detektiert werden. Beispielsweise kann die eine oder mehreren Schnittstellen eine Antenne zum Empfangen einer Funkwelle im Radiofrequenzbereich, einer Ultraschallwelle, etc. sein. Basierend auf der detektierten ersten physikalischen Welle kann das Kontrollmodul einen Parameter über das Objekt bestimmen. Beispielsweise kann ein Parameter des Objekts ein Ort, eine Geschwindigkeit, eine Form, eine Identifikation, etc. sein.

Die externe Information kann mittels der einen oder mehreren Schnittstellen empfangen werden. Die externe Information kann eine Information über eine detektierte zweite physikalische Welle umfassen. Beispielsweise kann der weitere Netzwerkknoten eine zweite physikalische Welle detektieren. Eine Information über die detektierte zweite physikalische Welle, beispielsweise eine Signalintensität, eine Phase, etc. kann dann mittels der externen Information an den Netzwerkknoten 30 gesendet werden. Eine Bestimmung eines Parameters des Objekts basierend auf der detektierten zweiten physikalischen Welle kann dann insbesondere durch den Netzwerkknoten 30 erfolgen. Alternativ oder optional kann der weitere Netzwerkknoten auch einen Parameter des Objekts basierend auf der detektierten zweiten physikalischen Welle selbst bestimmen und den bestimmten Parameter mittels der externen Information an den Netzwerkknoten 30 senden.

Basierend auf der externen Information und der detektierten physikalischen Welle kann dann eine Information für das Sensorsystem bestimmt werden. Durch die Kombination der externen Information mit der detektierten ersten physikalischen Welle kann beispielsweise eine Bestimmung eines Parameters des Objekts verbessert werden. Insbesondere kann der Netzwerkknoten 30 allein eine Bestimmung der Information für das Sensorsystem durchführen, welche durch den Informationsaustausch zwischen dem weiteren Netzwerkknoten und dem Netzwerkknoten 30 verbessert sein kann. Dadurch kann der Netzwerkknoten 30 insbesondere eine dezentrale Bestimmung der Information für das Sensorsystem ermöglichen.

In einem Ausführungsbeispiel kann die Information für das Sensorsystem einen Parameter des Objekts umfassen. Beispielsweise kann ein Parameter des Objekts ein Ort, eine Geschwindigkeit, eine Form, eine Identifikation, etc. sein. Durch die Kombination der detektierten ersten physikalischen Welle und der detektierten zweiten physikalischen Welle (über die mittels der externen Information Daten empfangen werden können) kann eine Bestimmung des Parameters des Objekts verbessert werden.

Insbesondere kann es sich bei dem Sensorsystem um ein Radarsystem handeln. Das Objekt kann dann innerhalb eines Abdeckungsbereichs des Radarsystems auf Basis einer ersten elektromagnetischen Welle und einer zweiten elektromagnetischen Welle erkannt bzw. detektiert werden.

In einem Ausführungsbeispiel kann die Information einen Parameter über eine Konsistenz der externen Information und der detektierten ersten physikalischen Welle umfassen. Beispielsweise kann aus der detektierten ersten physikalischen Welle eine erste Position des Objekts bestimmt und aus der externen Information (beispielsweise der detektierten zweiten physikalischen Welle) eine zweite Position des Objekts bestimmt werden. Sofern die erste Position und die zweite Position nicht übereinstimmen, kann von einer Inkonsistenz, also beispielsweise einer fehlerhaften Detektion der ersten oder zweiten physikalischen Welle ausgegangen werden. Alternativ kann auch davon ausgegangen werden, dass entweder der Netzwerkknoten 30 oder der weitere Netzwerkknoten fehlerhaft funktioniert. Dadurch kann eine Sicherheit des Sensorsystems erhöht werden, da ein Vorhandensein von fehlerhaften Netzwerkknoten detektiert werden kann.

In einem Ausführungsbeispiel kann das Kontrollmodul 34 ferner dazu ausgebildet sein einen Detektionsparameter der ersten physikalischen Welle zu bestimmen und eine Detektion der ersten physikalischen Welle basierend auf dem Detektionsparameter anzupassen. Dadurch kann eine Detektion der ersten physikalischen Welle verbessert werden. Hierdurch kann die Bestimmung der Information für das Sensorsystem verbessert werden. Beispielsweise kann die eine oder mehreren Schnittstellen 32 eine Steuerungseinheit umfassen, mit der eine Ausrichtung der einen oder mehreren Schnittstellen 34 verändert werden kann. Das Kontrollmodul 34 kann dann dazu ausgebildet sein, eine Ausrichtung der einen oder mehreren Schnittstellen zu verändern, so dass eine Detektion der ersten physikalischen Welle verbessert werden kann. Der Netzwerkknoten 30 kann also insbesondere eine (passive) Selbstorganisation, insbesondere unabhängig von einer zentralen Datenverarbeitungseinheit, durchführen.

In einem Ausführungsbeispiel kann das Kontrollmodul 34 ferner dazu ausgebildet sein die erste physikalische Welle mittels der einen oder mehreren Schnittstellen 32 abzustrahlen. Optional oder alternativ kann das Kontrollmodul 34 eine Intensität der detektierten ersten physikalischen Welle bestimmen. Wenn eine bestimmte Intensität zu gering ist, kann das Kontrollmodul 34 eine Abstrahlungsintensität, durch die eine oder mehrere Schnittstellen 34 erhöhen, sodass eine Detektion auf Grund der erhöhten Intensität der ersten abgestrahlten physikalischen Welle verbessert werden kann. In einem Ausführungsbeispiel kann das Kontrollmodul 34 ferner dazu ausgebildet sein einen Abstrahlungsparameter zu Bestimmen und das Abstrahlen der ersten physikalischen Welle basierend auf dem Abstrahlungsparameter anzupassen. Der Abstrahlungsparameter kann eine Intensität, eine Wellenlänge, eine Zeit der Abstrahlung etc. umfassen. Dadurch kann insbesondere eine Detektion der ersten physikalischen Welle verbessert, weil beispielsweise eine Interferenz mit der zweiten physikalischen Welle verringert werden kann. Beispielsweise kann der Netzwerkknoten 30 eine externe Information über die Detektion der zweiten physikalischen Welle von dem weiteren Netzwerkknoten empfangen und basierend auf dieser einen Abstrahlparameter der ersten physikalischen Welle anpassen. Der Netzwerkknoten 30 kann also insbesondere eine (aktive) Selbstorganisation, insbesondere unabhängig von einer zentralen Datenverarbeitungseinheit, durchführen.

In einem Ausführungsbeispiel kann das Kontrollmodul 34 ferner dazu ausgebildet sein eine Information über die erste physikalische Welle an den weiteren Netzwerkknoten zu senden. Insbesondere kann der weitere Netzwerkknoten dieselben Berechnungen ausführen wie der Netzwerkknoten 30. Beispielsweise kann der weitere Netzwerkknoten durch das Empfangen der Information über die erste physikalische Welle eine Berechnung eines Parameters des Objekts basierend auf der ersten detektierten und der zweiten detektierten physikalischen Welle durchführen.

Dadurch kann insbesondere ein multi-Agenten aufgebaut werden, wobei die einzelnen Netzwerkknoten 30 die Agenten des multi-Agenten-Systems darstellen. Das Sensorsystem kann dann also insbesondere eine multi-Agenten-System umfassen. Insbesondere kann es sich beim dem Netzwerkknoten 30 und dem weiteren Netzwerkknoten um gleichartige Netzwerkknoten handeln. Der Netzwerkknoten 30 und der weitere Netzwerkknoten können also identisch ausgebildet sein.

In einem Ausführungsbespiel kann der Netzwerkknoten 30 ferner eine Einheit zur Energieerzeugung umfassen. Dadurch kann ein Betrieb ohne ein Netzwerk zur Energieversorgung ermöglicht werden. Insbesondere kann ein kabelloser Betrieb des Netzwerkknotens 30 ermöglicht werden. Insbesondere kann ein Energiebedarf eines einzelnen Netzwerkknotens 30 deutlich geringer sein als ein Energiebedarf des Sensorsystems oder einer zentralen Datenverarbeitungseinheit. Dadurch können Verfahren des Energy Harvesting in Betracht gezogen werden, beispielsweise die Nutzung von Solarmodulen oder der Einsatz kleiner Windkraftanlagen zur Stromversorgung des Netzwerkknotens 30. Dadurch kann eine Unabhängigkeit von einer lokalen Strom- und Netzwerkinfrastruktur erreicht werden. Insbesondere kann dadurch eine Flexibilität des Netzwerkknotens 30 für einen Einsatz erhöht werden.

Bekannte Sensorsysteme nutzen ein kabelgebundenes Netzwerk zur Energieversorgung (beispielsweise ein Stromnetz) und Datenkommunikation (beispielsweise ein Telekommunikationsnetz mit Basisstationen). Mittels der Einheit zur Energieerzeugung kann durch Energy Harvesting und Radar und Kommunikation-Koexistenz ein vollständig kabelloser Betrieb des Sensorsystems ermöglicht werden, da die einzelnen Netzwerkknoten 30 vollständig kabellos betrieben werden können.

In einem Ausführungsbeispiel kann die Einheit zur Energieerzeugung dazu ausgebildet sein über eine Aufnahme einer physikalischen Welle Energie (zum Betrieb des Netzwerkknotens 30) zu erzeugen, beispielsweise über Induktion, den photoelektrischen Effekt, etc. Die physikalische Welle kann insbesondere die erste physikalische Welle sein. Dadurch kann ein Betrieb des Netzwerkknotens 30 nur dann erfolgen, wenn auch die erste physikalische Welle detektiert werden kann.

Der Netzwerkknoten 30 kann für eine Vielzahl an Anwendungen eingesetzt werden. Insbesondere kann ein Netzwerkknoten 30 durch ein entsprechendes Design, beispielsweise ein volldigitales Design, geeignet programmiert werden, sodass eine Anpassung an unterschiedliche Bedingungen möglich ist. Die eine oder mehrere Schnittstellen 32 können eine Einbindung in andere Hardund/oder Software optionaler Sensoriken und/oder Workflows erlauben. Beispielweise kann der Netzwerkknoten 30 für ein Radarsystem im Kontext des UTM-Umfelds, für ein Fahrzeug in einem Telekommunikationsnetz, für eine Boje zur Unterwasserdetektion, etc. eingesetzt werden.

Die eine oder mehreren Schnittstellen 32 können beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die zumindest eine oder mehreren Schnittstellen 32 kann beispielsweise ausgebildet sein, um über ein (Funk)-Netzwerk oder ein lokales Verbindungsnetzwerk mit anderen Netzwerkkomponenten, beispielsweise weiteren Netzwerkknoten, zu kommunizieren.

Wie in Fig. 1 dargestellt, sind die eine oder mehreren Schnittstellen 32 mit dem jeweiligen Kontrollmodul 34 der Vorrichtung 30 gekoppelt. In Beispielen kann die Vorrichtung 30 durch eine oder mehrere Verarbeitungseinheiten, ein oder mehrere Verarbeitungsgeräte, ein beliebiges Mittel zur Verarbeitung, wie z.B. einen Prozessor, einen Computer oder eine programmierbare Hardwarekomponente, die mit entsprechend angepasster Software betrieben werden kann, implementiert werden. Ebenso können die beschriebenen Funktionen des Kontrollmoduls 34 auch in Software implementiert werden, die dann auf einer oder mehreren programmierbaren Hardwarekomponenten ausgeführt wird. Solche Hardwarekomponenten können ein Mehrzweckprozessor, ein digitaler Signalprozessor (DSP), ein Mikrocontroller usw. sein. Das Kontrollmodul 34 kann in der Lage sein, die eine oder mehrere Schnittstellen 32 zu steuern, so dass jede Datenübertragung, die über die eine oder mehrere Schnittstellen 32 erfolgt, und/oder jede Interaktion, an der die eine oder mehrere Schnittstellen 32 beteiligt sein können, von dem Kontrollmodul 34 gesteuert werden kann.

In Ausführungsbeispielen kann das Kontrollmodul 34 einem beliebigen Controller oder Prozessor oder einer programmierbaren Hardwarekomponente entsprechen. Beispielsweise kann das Kontrollmodul 34 auch als Software realisiert sein, die für eine entsprechende Hardwarekomponente programmiert ist. Insofern kann das Kontrollmodul 34 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 34 denkbar.

In einer Ausführungsform kann die Vorrichtung 30 einen Speicher und mindestens ein Kontrollmodul 34 umfassen, das funktionsfähig mit dem Speicher gekoppelt und so konfiguriert ist, dass sie das unten beschriebene Verfahren durchführt.

In Beispielen können die eine oder mehrere Schnittstellen 32 jedem Mittel zum Erhalten, Empfangen, Übertragen oder Bereitstellen von analogen oder digitalen Signalen oder Informationen entsprechen, z. B. jedem Anschluss, Kontakt, Stift, Register, Eingangsanschluss, Ausgangsanschluss, Leiter, Spur usw., der die Bereitstellung oder den Erhalt eines Signals oder einer Information ermöglicht. Die eine oder mehreren Schnittstellen 32 können drahtlos oder drahtgebunden sein und können so konfiguriert sein, dass sie mit weiteren internen oder externen Komponenten kommunizieren können, z. B. Signale oder Informationen senden oder empfangen können.

In zumindest manchen Ausführungsbeispielen kann das Fahrzeug beispielsweise einem Landfahrzeug, einem Wasserfahrzeug, einem Luftfahrzeug, einem Schienenfahrzeug, einem Straßenfahrzeug, einem Auto, einem Bus, einem Motorrad, einem Geländefahrzeug, einem Kraftfahrzeug, oder einem Lastkraftfahrzeug entsprechen.

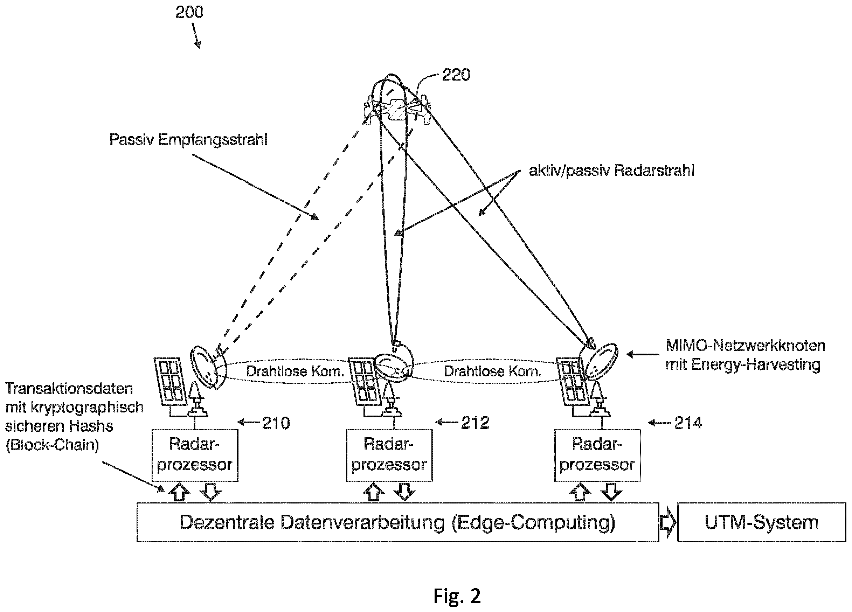

Weitere Einzelheiten und Aspekte werden im Zusammenhang mit den unten beschriebenen Ausführungsbeispielen erwähnt. Das in Fig. 1 gezeigte Ausführungsbeispiel kann ein oder mehrere optionale zusätzliche Merkmale umfassen, die einem oder mehreren Aspekten entsprechen, die im Zusammenhang mit dem vorgeschlagenen Konzept oder einem oder mehreren unten beschriebenen Ausführungsbeispielen (z. B. Fig. 2 - 3) erwähnt wurden.

Fig. 2 zeigt eine schematische Darstellung eines Beispiels eines Sensorsystems 200. Das Sensorsystem 200 umfasst eine Mehrzahl an Netzwerkknoten 210, 212, 214 wie mit Bezug zu Fig. 1 beschrieben. Insbesondere kann das Sensorsystem 200 ein Radarsystem sein.

Bekannte Sensorsysteme verfügen über eine zentrale Datenverarbeitungseinheit. Durch die Verwendung einer Vielzahl von Netzwerkknoten 210, 212, 214, die dazu ausgebildet sind untereinander zu kommunizieren, kann die Datenverarbeitungseinheit entfallen. Die Datenverarbeitung kann im Sensorsystem 200 dezentral über den Edge-Computing Ansatz auf verschiedene MIMO-Radare 210, 212, 214 verteilt stattfinden.

Das Sensorsystem 200 kann aktive und passive Radarverfahren kombinieren. Beispielsweise kann der Netzwerkknoten 210 keine physikalische Welle abstrahlen, sondern lediglich eine von dem Objekt 220 abgestrahlte physikalische Welle detektierten. Die beiden anderen Netzwerkknoten 212, 214 können sowohl eine physikalische Welle zur Reflektion an dem Objekt 220 abstrahlen und die reflektierte physikalische Welle detektieren, als auch die von dem Objekt 220 abgestrahlte physikalische Welle detektieren.

Insbesondere kann ein Netzwerkknoten 210, 212, 214 sowohl passiv (keine Abstrahlung einer physikalischen Welle, sondern lediglich Detektion einer von dem Objekt 220 abgestrahlten und/oder einer reflektierten Welle) oder aktiv (Abstrahlung einer physikalischen Welle zur Reflexion an dem Objekt 220) sein. Beispielsweise kann der Netzwerkknoten 210 eine von dem Objekt 220 abgestrahlte physikalische Welle (und/oder eine an dem Objekt reflektierte physikalische Welle, welche beispielsweise von einem anderen Netzwerkknoten 212, 214 abgestrahlt wurde) mit einer ausreichenden Intensität detektieren, sodass keine aktive Detektion (also ein Abstrahlen einer physikalischen Welle) erforderlich ist. Der Netzwerkknoten 212 kann beispielsweise von dem Netzwerkknoten 210 eine externe Information über die detektierte Intensität, der von dem Objekt 220 abgestrahlten physikalischen Welle empfangen. Basierend auf der externen Information kann der Netzwerkknoten 212 bestimmen, dass ein Objekt 220 in seinem Abdeckungsbereich ist, von dem er aber keine physikalische Welle mit einer ausreichenden Intensität detektiert. Dementsprechend kann der Netzwerkknoten 212 selbst eine physikalische Welle zur Reflektion an dem Objekt 220 abstrahlen, um eine Detektion des Objekts 220 zu verbessern. Dadurch kann eine Strahlungsbelastung durch einen teil-passiven MIMO-Radarbetrieb reduziert werden. Außerdem kann eine Verbesserung einer Akzeptanz von Sensorsystemen 200, wie z. B. Radarsystemen, durch die Kombination von aktiven und passiven MIMO-Radaren ermöglicht werden. Insbesondere kann durch den Empfang der externen Information eine Selbstorganisation der Netzwerkknoten 210, 212, 214 unterstützt werden, da sich die Netzwerkknoten über verwendeten Ressourcen informieren können.

Durch die Verwendung von aktiven und passiven Netzwerkknoten 210, 212, 214 kann eine Synergie aus aktiven und passiven Radarverfahren für ein modulares, resilientes Netzwerk aus strahlungsarmen, kommunizierenden Netzwerkknoten 210, 212, 214 entstehen. Insbesondere kann durch das Kontrollmodul (beispielsweise einen Radarprozessor) eine Vielzahl von Aufgaben durchgeführt werden, beispielsweise ein Tracking oder eine Klassifizierung von Verkehrsteilnehmern, wie z. B. dem Objekt 220, oder potenziellen Hindernissen.

In einem Ausführungsbeispiel kann eine Bestimmung der Information des Sensorsystem 200 basierend auf einer dezentralen Datenverarbeitung durch zumindest zwei Netzwerkknoten 210, 212, 214 der Mehrzahl an Netzwerkknoten erfolgen. Insbesondere kann eine dezentrale Bestimmung der Information des Sensorsystems 200, z. B. eines Parameters betreffend das Objekt 220, eine Konsistenzinformation der Netzwerkknoten 210, 212, 214, etc., auf die einzelnen Netzwerkknoten 210, 212, 214 aufgeteilt werden. Diese kann z. B. gemäß dem Gedanken des Edge Computing dynamisch auf eine Mehrzahl der Netzwerkknoten 210, 212, 214, bevorzugt auf alle Netzwerkknoten 210, 212, 214 erfolgen. Die Netzwerkarchitektur des Sensorsystem 200 kann dadurch automatisch an eine jeweilige Situation angepasst werden. Die Aufteilung der Aufgaben der Netzwerkknoten 210, 212, 214 kann beispielsweise über einen geeigneten Algorithmus oder eine künstliche Intelligenz erfolgen.

Insbesondere kann bei einer etwaigen Störung einzelner Netzwerkknoten 210, 212, 214 weiterhin das Sensorsystem 200 funktionstüchtig sein. Beispielsweise kann ein gestörter Netzwerkknoten durch Vergleich der bestimmten Information für das Sensorsystem 200 mit den bestimmten Informationen für das Sensorsystem 200 der anderen Netzwerkknoten überprüft werden. Sofern die Information für das Sensorsystem 200 eines Netzwerkknoten 210, 212, 214 nicht konsistent mit den Informationen für das Sensorsystem 200 der anderen Netzwerkknoten 210, 212, 214 ist, kann der Netzwerkknoten 210, 212, 214 als gestört angesehen werden. Dies wird dadurch ermöglicht, dass eine Vielzahl an Netzwerkknoten 210, 212, 214 dieselbe Information für das Sensorsystem 200 bestimmt, sodass bei Abweichungen auf einen gestörten Netzwerkknoten 210, 212, 214 geschlossen werden kann. Dadurch kann insbesondere eine Sicherheit des Sensorsystem 200 erhöht werden.

Beispielsweise kann die Netzwerkarchitektur des Sensorsystem 200 im Falle eines Ausfalls oder einer Störung eines Netzwerkknotens 210, 212, 214 durch einen kontinuierlichen Abgleich der Ausgaben (die Information über das Sensorsystem 200) der anderen Netzwerkknoten 210, 212, 214 dies selbstständig feststellen und darauf entsprechend reagieren (z.B. falsche Informationen aus der Verarbeitung ausschließen, eine Abstrahlung der physikalischen Welle der Netzwerkknoten 212, 214 anpassen, um eine bestmögliche Abdeckung ohne einen fehlerhaften Netzwerkknoten zu erzielen, etc.). Damit eignet sich das Sensorsystem 200 besonders für den Einsatz in einem sicherheitskritischen Umfeld.

In einem Ausführungsbeispiel kann eine Kommunikation von Transaktionsdaten der zumindest zwei Netzwerkknoten 210, 212, 214 zur dezentralen Datenverarbeitung mittels einer Block-Chain erfolgen. Dadurch kann insbesondere eine Sicherheit des Sensorsystems 200 erhöht werden. Die Datensicherheit des Netzwerks des Sensorsystem 200 kann durch eine Umsetzung von Blockchain-Konzepten erhöht werden. Insbesondere kann eine Erhöhung der Sicherheit gegenüber Manipulation durch den Einsatz von Block-Chain Technologien in Verbindung mit einem kryptographischen Verfahren zur Verwaltung der erfassten Daten in der Netzwerkarchitektur des Sensorsystem 200 erfolgen.

In einem Ausführungsbeispiel kann zumindest ein erster Netzwerkknoten der Mehrzahl an Netzwerkknoten zu einer ersten Hierarchieebene und ein zweiter Netzwerkknoten der Mehrzahl an Netzwerkknoten zu einer zweiten Hierarchieebene gehört. Durch die unterschiedlichen Hierarchieebenen kann, insbesondere temporär, ein Netzwerkknoten 210, 212, 214 eine Möglichkeit erhalten, hinsichtlich einer Ressourcenverteilung von dem Ansatz des Selbstorganisatin abzuweichen. Für den Fall, dass alle Netzwerkknoten 210, 212, 214 derselben Hierarchieebene angehöhren, kann jeder Netzwerkknoten 210, 212, 214 eine Selbstorganisation durchführen, beispielsweise für sich allein benötigte Ressourcen, wie z. B. einen Abstrahlungswinkel, eine Abstrahlungsintensität, eine Wellenlänge, etc. bestimmen (optional unter Berücksichtigung einer empfangenen externen Information). Durch die Zuordnung verschiedener Hierarchieebenen kann ein Netzwerkknoten 210, 212, 214 aus einer höheren Hierarchieebene beispielsweise temporär eine Zuordnung/Zuteilung von Ressourcen für einen anderen Netzwerkknoten 210, 212, 214 aus einer niedrigeren Hierarchieebene durchführen, beispielsweise um Interferenzen zwischen verschiedenen abgestrahlten physikalischen Wellen zu vermeiden.

Wie bereits oben ausgeführt kann Energy Harvesting für die Netzwerkknoten 210, 212, 214 betrieben werden. Dadurch kann das Sensorsystem 200 unabhängig von vorhandener kabelgebundener Infrastruktur betrieben werden. Insbesondere kann Energy Harvesting einen Betrieb ohne eine Anbindung an ein äußeres Stromnetz ermöglichen. Ferner kann das Prinzip des Joint Communication and Sensing eine eigenständige Datenübertragung zwischen den Netzwerkknoten 210, 212, 214 ermöglichen.

Ein Anwendungsgebiet für das Sensorsystem 200 kann Kontrollaufgaben für Drohnenleitsysteme im niedrigen Luftraum sein. Hier besteht ein Bedarf vor allem im Bereich Logistik für den Güter- und Personentransport, welcher mittels autonomer Drohnen abgewickelt werden kann. Ebenso kann auch anderen Industriezweigen ein Bedarf für Drohnenleitsysteme bestehen, beispielsweise in Inspektionsaufgaben im Energie-, Telekomunikations und Bausektor, Gesundheitsführsorge durch ambulante Hilfeleistung, Schutz kritischer Infrastruktur vor nicht-kooperativen Verkehrsteilnehmern, weitere Bereich von Safety & Security, Abfallentsorgung und Sanierung, Landwirtschaft, Kurierdienste, Intralogistik für Lagerhaltung oder sonstige wissenschaftliche und technische Dienstleistungen.

Weitere Einzelheiten und Aspekte werden im Zusammenhang mit den unten und/oder oben beschriebenen Ausführungsbeispielen erwähnt. Das in Fig. 2 gezeigte Ausführungsbeispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben (z. B. Fig. 1) und/oder unten beschriebenen Ausführungsbeispielen (z. B. Fig. 3) erwähnt wurden.

Fig. 3 zeigt eine schematische Darstellung eines Beispiels eines Verfahrens 300. Das Verfahren 300 für einen Netzwerkknoten (wie oben beschrieben mit Bezug zu Fig. 1) eines Sensorsystems (wie oben beschrieben mit Bezug zu Fig. 2) umfasst Detektieren 310 einer an einem Objekt reflektierten oder eine von diesem Objekt ausgesandten ersten physikalischen Welle und Empfangen 320 einer externen Information über eine an dem Objekt reflektierten oder von diesem Objekt ausgesandten zweiten physikalischen Welle von einem weiteren Netzwerkknoten. Ferner umfasst das Verfahren 300 Bestimmen 330 einer Information für das Sensorsystem basierend auf der ersten detektierten physikalischen Welle und der externen Information. Durch das Verfahren 300 kann eine zentrale Datenverarbeitungseinheit eines Sensorsystems ersetzt werden. Insbesondere kann jeder Netzwerkknoten eines Sensorsystem eine eigenständige Bestimmung der Information für das Sensorsystem durchführen.

Weitere Einzelheiten und Aspekte werden im Zusammenhang mit den oben beschriebenen Ausführungsbeispielen erwähnt. Das in Fig. 2 gezeigte Ausführungsbeispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben (z. B. Fig. 1 - 2) beschriebenen Ausführungsbeispielen erwähnt wurden.

## Patentansprüche

1. Ein Netzwerkknoten (30; 210; 212; 214) für ein Sensorsystem, umfassend
eine oder mehrere Schnittstellen (32) zur Kommunikation mit einem weiteren Netzwerkknoten (210; 212; 214); und
ein Kontrollmodul (34), dazu ausgebildet die eine oder mehreren Schnittstellen (32) zu kontrollieren und:
eine an einem Objekt reflektierte oder von diesem Objekt ausgesandte erste physikalische Welle zu detektieren;
eine externe Information über eine an dem Objekt reflektierte oder eine von diesem Objekt ausgesandte zweite physikalische Welle von dem weiteren Netzwerkknoten (210; 212; 214) zu empfangen; und
eine Information für das Sensorsystem basierend auf der ersten detektierten physikalischen Welle und der externen Information zu bestimmen.

2. Der Netzwerkknoten (30; 210; 212; 214) nach Anspruch 1, wobei
die Information für das Sensorsystem einen Parameter des Objekts umfasst.

3. Der Netzwerkknoten (30; 210; 212; 214) nach einem der vorhergehenden Ansprüche, wobei
die Information einen Parameter über eine Konsistenz der externen Information und der detektierten ersten physikalischen Welle umfasst.

4. Der Netzwerkknoten (30; 210; 212; 214) nach einem der vorhergehenden Ansprüche, wobei das Kontrollmodul (34) ferner dazu ausgebildet ist:
einen Detektionsparameter der ersten physikalischen Welle zu bestimmen; und
eine Detektion der ersten physikalischen Welle basierend auf dem Detektionsparameter anzupassen.

5. Der Netzwerkknoten (30; 210; 212; 214) nach einem der vorhergehenden Ansprüche, wobei das Kontrollmodul (34) ferner dazu ausgebildet ist
die erste physikalische Welle mittels der einen oder mehreren Schnittstellen (32) abzustrahlen.

6. Der Netzwerkknoten (30; 210; 212; 214) nach Anspruch 5, wobei das Kontrollmodul (34) ferner dazu ausgebildet ist:
einen Abstrahlungsparameter zu Bestimmen; und
das Abstrahlen der ersten physikalischen Welle basierend auf dem Abstrahlungsparameter anzupassen.

7. Der Netzwerkknoten (30; 210; 212; 214) nach einem der vorhergehenden Ansprüche, wobei das Kontrollmodul (34) ferner dazu ausgebildet ist
eine Information über die erste detektierte physikalische Welle an den weiteren Netzwerkknoten (210; 212; 214) zu senden.

8. Der Netzwerkknoten (30; 210; 212; 214) nach einem der vorhergehenden Ansprüche, ferner umfassend
eine Einheit zur Energieerzeugung.

9. Der Netzwerkknoten (30; 210; 212; 214) nach Anspruch 8, wobei
die Einheit zur Energieerzeugung dazu ausgebildet ist über eine Aufnahme einer physikalischen Welle Energie zu erzeugen.

10. Der Netzwerkknoten (30; 210; 212; 214) nach Anspruch 8 oder 9, ferner umfassend eine Einheit zur Energieübertragung, dazu ausgebildet Energie zu dem weiteren Netzwerkknoten (210; 212; 214) mittels einer physikalischen Welle zu übertragen.

11. Ein Sensorsystem (200) zur Bestimmung eines Parameters eines Objekts, umfassend
eine Mehrzahl an Netzwerkknoten (210; 212; 214) nach einem der vorhergehenden Ansprüche.

12. Das Sensorsystem (200) nach Anspruch 11, wobei
eine Bestimmung der Information des Sensorsystem (200) basierend auf einer dezentralen Datenverarbeitung durch zumindest zwei Netzwerkknoten (210; 212; 214) der Mehrzahl an Netzwerkknoten (210; 212; 214) erfolgt.

13. Das Sensorsystem (200) nach einem der Ansprüche 11-12, wobei
zumindest ein erster Netzwerkknoten der Mehrzahl an Netzwerkknoten (210; 212; 214) zu einer ersten Hierarchieebene und ein zweiter Netzwerkknoten der Mehrzahl an Netzwerkknoten (210; 212; 214) zu einer zweiten Hierarchieebene gehört.

14. Ein Verfahren (300) für einen Netzwerkknoten für ein Sensorsystem, umfassend:
Detektieren (310) einer an einem Objekt reflektierten oder eine von diesem Objekt ausgesandten ersten physikalischen Welle;
Empfangen (320) einer externen Information über eine an dem Objekt reflektierten oder von diesem Objekt ausgesandten zweiten physikalischen Welle von einem weiteren Netzwerkknoten, und
Bestimmen (330) einer Information für das Sensorsystem basierend auf der ersten detektierten physikalischen Welle und der externen Information.

15. Ein Computerprogramm zur Durchführung des Verfahrens nach Anspruch 14, wenn das Computerprogramm auf einem Computer, einem Prozessor, oder einer programmierbaren Hardwarekomponente abläuft.
